# EUROPÄISCHE PATENTSCHRIFT

(11) **EP 4 450 836 B1**
(45) Veröffentlichungstag und Bekanntmachung des Hinweises auf die Patenterteilung: **06.05.2026**
(21) Anmeldenummer: 24167153.6
(22) Anmeldetag: 28.03.2024
(51) Int. Cl.: F16B 25/00

(54) **HOLZSCHRAUBE**
WOOD SCREW
VIS À BOIS

(30) Priorität: 21.04.2023 DE 102023110239
(43) Veröffentlichungstag der Anmeldung: 23.10.2024
(73) Patentinhaber: Berner Omnichannel Trading Holding SE, 74653 Künzelsau (DE)
(72) Erfinder: VORNEFELD, Mark, 74653 Künzelsau (DE)
(74) Vertreter: Glawe, Delfs, Moll

(56) Entgegenhaltungen:
- EP-A1- 0 104 552
- EP-A1- 3 943 763
- CA-A1- 2 512 042
- DE-U1- 202013 101 296
- GB-A- 2 428 761
- JP-A- 2012 072 840
- JP-A- S56 160 414
- TW-A- 200 949 086

## Beschreibung

Die Erfindung betrifft eine Holzschraube.

Holzschrauben sind aus dem Stand der Technik bekannt. Üblicherweise weisen Holzschrauben einen Schraubenkopf, eine Spitze und einen sich dazwischen erstreckenden Schaft auf, der einen zylindrischen Kerndurchmesser aufweist. Entlang des Schafts in Richtung der Spitze verläuft ein Gewinde, wodurch die Holzschraube beim Eindrehen in ein Werkstück ein entsprechendes Gegengewinde schneiden und somit im Bohrkanal Halt finden kann.

Um das Eindrehverhalten von Holzschrauben zu verbessern, können unterschiedlich ausgeführte Gewinde entlang des Schafts vorgesehen sein, beispielsweise von der Spitze bis zum Kopf durchgängig verlaufende Gewinde oder abschnittsweise am Schaft ausgebildete Gewinde. Ebenso ist das Anbringen von zusätzlichen Schneidgeometrien in Form von Schneidrippen, Spanbrechern oder Schälrippen im Bereich der Schraubenspitze beziehungsweise des Schraubenschafts bekannt. Diese sorgen insbesondere für einen reduzierten Widerstand beim Eindrehen der Holzschraube in ein Werkstück, indem die genannten Schneidgeometrien beim Eindrehen der Holzschraube einen Teil des Holzmaterials wegschaben und abtransportieren.

Die bekannten Holzschrauben weisen jedoch Verbesserungsbedarf hinsichtlich des Eindrehverhaltens auf.

Aus der JP S56 160414 A ist eine Metallschraubedie auch bei dünnen Metallplatten ein Eindrehen sicherstellt. Hierzu hat die Schraube im Spitzenbereich ein zweites Gewinde.

Die DE 20 2013 101296 U1 beschreibt eine Schraube, die in einem vorderen Endabschnitt vier Gewindegänge hat. Beabstandet von den vier Gewindegängen gibt es im Schaftbereich ein Eingriffsgewinde, das nach diesen vier Gewindegängen in Funktion tritt.

Die EP 3 943 763 A1 hat eine Holzschraube zum Gegenstand, bei der ein eingängiges oder mehrgängiges Gewinde vom Kopfende gesehen über den Schaftabschnitt hinweg bis in den Spitzenbereich zur Spitze läuft. Ein zusätzliches gegenläufiges Gewinde ist ebenfalls vorhanden.

Insofern ist es die Aufgabe der vorliegenden Erfindung, eine Holzschraube bereitzustellen, die sich durch ein gutes Eindrehverhalten in einem Werkstück auszeichnet.

Diese Aufgabe wird erfindungsgemäß gelöst durch eine Holzschraube nach Anspruch 1.

Vorteilhafte Ausführungsformen sind in den Unteransprüchen wiedergegeben, die wahlweise miteinander kombiniert werden können.

Erfindungsgemäß weist die Holzschraube eine Spitze, einen Schraubenkopf und einen Schaft auf, der sich vom Schraubenkopf ausgehend erstreckt und in einen konvex kegelförmigen Spitzenabschnitt übergeht. Der Spitzenabschnitt bildet den Übergang vom Schaft zu der Spitze. Ferner weist die Holzschraube ein Gewinde auf, das sich über einen am Spitzenabschnitt angrenzenden zylindrischen Gewinde-Schaftabschnitt in den Spitzenabschnitt hineinerstreckt. Das Gewinde ist im Bereich des Spitzenabschnitts zweigängig ausgebildet.

Unter einem zylindrisch geformten Gewinde-Schaftabschnitt wird die Form des Gewindekerns im Gewinde-Schaftabschnitt verstanden, ohne das dazugehörige um den Gewindekern verlaufende Gewinde. Ein Gewindegang endet vor dem Übergang zum Gewinde-Schaftabschnitt am Spitzenabschnitt und der andere Gewindegang bis zu einem Fräsabschnitt des Schafts verläuft.

Auf diese Weise kann eine Holzschraube bereitgestellt werden, die lediglich im Bereich des Spitzenabschnitts zweigängig ist, wohingegen die Holzschraube im Bereich des Gewinde-Schaftabschnitts im Wesentlichen eingängig ist. Dem liegt der Gedanke zugrunde, dass das zweigängige Gewinde lediglich im Bereich des Spitzenabschnitts notwendig ist, da die Holzschraube aufgrund des konvex kegelförmigen Spitzenabschnitts nur zu Beginn des Eindrehens stabilisiert werden muss. Ist die erfindungsgemäße Holzschraube erst einmal angezogen, also der konvex kegelförmige Spitzenabschnitt im Werkstück versenkt, so ist ein eingängiges Gewinde im Bereich des Gewinde-Schaftabschnitts ausreichend für das weitere Eindrehen.

Gemäß der Erfindung ist im Übergangsbereich zwischen Spitzenabschnitt und Gewinde-Schaftabschnitt ein Spanbrecher in Form einer Rippe vorgesehen.

Die vorgeschlagene Holzschraube zeichnet sich durch ein verbessertes Eindrehverhalten in einem Werkstück aus. Das verbesserte Eindrehverhalten wird durch die Kombination aus dem konvex kegelförmigen Spitzenabschnitt sowie dem zweigängigen Gewinde im Bereich des Spitzenabschnitts erreicht.

Hierbei ermöglicht der konvex kegelförmige Spitzenabschnitt zu Beginn des Einschraubens in einem Werkstück, dass mit wenigen Umdrehungen möglichst viel Holz verdrängt wird. Dies ist der konvexen Geometrie der Außenkontur des Spitzenabschnitts geschuldet, die im Gegensatz zu bekannten, rein konisch geformten Spitzenabschnitten einen steileren Anstieg des Kerndurchmessers im Bereich unmittelbar um die Spitze herum aufweist. Im Längsschnitt des Spitzenabschnitts ist die den Kegel definierende Seitenumfangsfläche nach außen, d.h. konvex gewölbt. In Richtung des Schraubenkopfs flacht der Anstieg des Kerndurchmessers dann zunehmend ab. Rückt dieser Abschnitt in die gebohrte Holzöffnung nach, so wird das verdrängte Holz nachverdichtet. Dadurch wird die gebohrte Öffnung zusätzlich stabilisiert und das Eindrehverhalten der Schraube verbessert.

Aufgrund des schnellen Anstiegs des Kerndurchmessers ist zu Beginn des Eindrehens ein erhöhter Widerstand gegeben. Damit die erfindungsgemäße Holzschraube trotz dieses erhöhten Widerstandes stabil und ohne Taumelbewegung in ein Werkstück eingedreht werden kann, ist im Bereich des konvex kegelförmigen Spitzenabschnitts ein zweigängiges Gewinde vorgesehen, wodurch die Holzschraube bereits nach wenigen Umdrehungen sicher greift. Daher wirkt das zweigängige Gewinde auch synergistisch mit dem konvex kegelförmigen Spitzenabschnitt zusammen, um das Eindrehverhalten der erfindungsgemäßen Holzschraube zu verbessern. Ferner stabilisiert der zweite Gewindegang auch die Holzschraube seitlich beim Eindrehen.

Gemäß einem ersten Aspekt der Erfindung enden ein erster Gewindegang des zweigängigen Gewindes und ein zweiter Gewindegang des zweigängigen Gewindes in Richtung zu der Spitze in einem Abstand. Insbesondere enden der erste Gewindegang und der zweite Gewindegang im gleichen Abstand zu der Spitze, um beim ersten Greifen der Holzschraube diese nicht zu verkanten.

Auf diese Weise wird ein gewindefreier Abschnitt zwischen der Spitze und dem Beginn des zweigängigen Gewindes geschaffen. Dies ermöglicht vorteilhafterweise ein punktgenaues Fixieren der Spitze auf einem Holzwerkstück, wobei der gewindefreie Abschnitt im Holzwerkstück ohne Eindrehen versenkt werden kann, sodass die beiden Enden des ersten Gewindegangs und des zweiten Gewindegangs vor dem Einschrauben auf der Oberfläche des Holzwerkstücks aufliegen. Das nachfolgende Eindrehen der Holzschraube kann somit aus einer gestützten Position heraus erfolgen, wodurch Mahl- und Taumelbewegungen der Holzschraube beim Eindrehen vermieden werden.

Gemäß einem weiteren Aspekt der Erfindung verlaufen der erste Gewindegang und der zweite Gewindegang des zweigängigen Gewindes um 180° versetzt zueinander. Eine Holzschraube mit einem solchen zweigängigen Gewinde ist besonders einfach herzustellen und taumelt beim Eindrehen nicht.

In einer weiteren Ausführungsform weisen der erste Gewindegang und der zweite Gewindegang des zweigängigen Gewindes jeweils schraubenkopfseitige Gewindeflanken und davon entgegengesetzt angeordnete spitzenseitige Gewindeflanken auf, wobei die spitzenseitigen Gewindeflanken zu der Spitze hin geneigt sind.

Unter dem Merkmal "zu der Spitze hin geneigt" wird im Folgenden verstanden, dass die spitzenseitigen Gewindeflanken in einer Schnittebene betrachtet, in der die Rotationsmittelachse der Holzschraube liegt, einen der Spitze zugewandten Winkel γ mit der Rotationsmittelachse einschließen, der kleiner oder gleich 90° ist. Eine solche Holzschraube weist eine verbesserte Auszugfestigkeit auf.

Ein weiterer Aspekt der Erfindung sieht vor, dass der erste Gewindegang und der zweite Gewindegang des zweigängigen Gewindes jeweils in einem spitzenseitigen Schneidflügel enden.

Die Schneidflügel dienen jeweils als Schabeabschnitte und verbessern das Eindrehverhalten der Holzschraube in einem Werkstück. Zwar erhöhen die Schneidflügel zu Beginn des Eindrehens den Widerstand, jedoch wird insgesamt ein stabileres Eindrehen ohne Mahl- oder Taumelbewegungen der Holzschraube erreicht.

Die Schneidflügel können jeweils dieselbe oder eine geringere radiale Höhe aufweisen wie bzw. als das in den Schneidflügeln mündende Gewinde.

Beispielsweise können die Schneidflügel eine radiale Höhe von bis zu 1/8, 1/4 oder 1/2 der Höhe des Gewindes aufweisen.

Im Falle einer geringeren radialen Höhe der Schneidflügel im Vergleich zu dem Gewinde kann jeweils zwischen einem Schneidflügel und einem darin mündenden Gewinde ein Gewinde-Zwischenabschnitt vorgesehen sein, dessen radiale Höhe ausgehend von dem Gewinde kontinuierlich bis auf die Höhe des Schneidflügels abnimmt. Dadurch können Hinterschneidungen bei der Fertigung vermieden werden, sodass die Schraube ohne Spannungsspitzen eingedreht werden kann.

Unter radialer Höhe ist die radiale Ausdehnung des Schneidflügels oder des Gewindes in Bezug auf die Außenkontur des Spitzenabschnitts gemeint.

Für den Fall, dass die Schneidflügel dieselbe radiale Höhe aufweisen wie das in den Schneidflügeln mündende Gewinde, so können die Schneidflügel als Auflagefläche auf der Oberfläche des zu bearbeitenden Werkstücks dienen. Auf diese Weise kann die Holzschraube aus einer stabilen, abgestützten Position heraus eingedreht werden.

Weisen die Schneidflügel eine geringere radiale Höhe wie das in den Schneidflügeln mündende Gewinde auf, so ist der Widerstand zu Beginn des Eindrehens, im Vergleich zu Schneidflügeln, die dieselbe radiale Höhe wie das Gewinde aufweisen, reduziert.

Gemäß einem anderen Aspekt der Erfindung weist jeder Schneidflügel eine Schneidkante auf, die sich im Wesentlichen in einem senkrechten Winkel zu der Rotationsmittelachse der Holzschraube erstreckt. Durch das Bereitstellen einer Schneidkante kann der Widerstand beim Eindrehen der Holzschraube reduziert werden, sodass das Eindrehverhalten insgesamt verbessert wird.

Ferner kann der konvex kegelförmige Spitzenabschnitt einen spitzen Winkel α in einem Bereich von 15 bis 30° aufweisen, bevorzugt von 25 bis 30°.

Damit ist die Schraubenspitze der erfindungsgemäßen Holzschrauben nadelbeziehungsweise nagelartig ausgeführt und gestattet ein Einstechen der Holzschraube in einem Holzwerkstoff vor Beginn des Einschraubens. Auf diese Weise kann die Holzschraube im Werkstück fixiert werden ohne dass ein anfängliches Eindrehen erforderlich ist.

Ferner kann der konvex kegelförmige Spitzenabschnitt in einer Schnittebene betrachtet, in der die Rotationsmittelachse liegt, einen Radius R aufweisen, für den der folgende Zusammenhang gilt, bezogen auf den Nenndurchmesser (d) des Gewindes der Holzschraube im Gewinde-Schaftabschnitt: d/R = 0,13 - 0,18, bevorzugt von d/R = 0,145 - 0,175. Beispielsweise kann der Nenndurchmesser 8 mm und der Radius 45 bis 55 mm betragen.

Eine solcher Radius des konvex kegelförmigen Spitzenabschnitts ist besonders geeignet, um zu Beginn des Eindrehens ausreichend Holz zu verdrängen und im späteren Verlauf des Eindrehens entsprechend nachzuverdichten. Dadurch wird die Stabilität des gefrästen Bohrkanals erhöht und das Eindrehverhalten der Holzschraube insgesamt verbessert.

Insbesondere ist es vorgesehen, dass sich die Rippe wenigstens abschnittsweise um den Spitzenabschnitt oder Gewinde-Schaftabschnitt ringförmig herum erstreckt, wobei die Rippe bevorzugt umfangsmäßig durchgängig ausgeführt ist.

Die Rippe kann auch wie das Zusatzgewinde in der EP 3 943 763 A1 gestaltet sein, auf die hiermit Bezug genommen wird.

Es ist daher denkbar, dass eine Rippe vorgesehen ist, die sich abschnittsweise im Bereich des konvex kegelförmigen Spitzenabschnitts von einem Gewindegang zum nächsten Gewindegang in Längsrichtung der Schraube erstreckt und an den entgegengesetzten Enden in das Gewinde übergeht, ohne sich mit einem Gewindegang zu überkreuzen.

Bevorzugt erstreckt sich eine solche Rippe über maximal 1/3 der Länge des konvex kegelförmigen Spitzenabschnitts, insbesondere über weniger als 1/3 der Länge des konvex kegelförmigen Spitzenabschnitts, sodass die Schraube beim Eindrehen gut sitzt und dennoch ausreichend schabt.

Unter Übergangsbereich ist der Bereich zwischen Spitzenabschnitt und Gewinde-Schaftabschnitt gemeint. In diesem Bereich muss das Gewinde nicht mehr zweigängig sein.

Eine solche Rippe reduziert den Widerstand beim Eindrehen der Holzschraube, indem die Rippe beim Eindrehen der Schraube den Holzspan bricht und abtransportiert.

In einem weiteren Aspekt der Erfindung weist der Gewinde-Schaftabschnitt und/oder der Spitzenabschnitt einen unrunden Querschnitt auf. Insbesondere weist der Querschnitt des Gewindekreises eine trilobulare Form auf.

Unter einem unrunden Querschnitt wird ein nicht kreisförmiger Umfang des Gewindekerns verstanden, der den Gewindekern und ferner in periodischen Abständen bogenförmige Ausbuchtungen aufweist.

Zum einen dient eine derartige Ausgestaltung des Querschnitts zur verbesserten Verdichtung des Holzes. Zum anderen wird eine verringerte Reibung zwischen dem Gewinde-Schaftabschnitt der Holzschraube und dem gefrästen Bohrloch erzielt. Insbesondere stellt die trilobulare Form sicher, dass der Gewindekern im Bereich des Gewinde-Schaftabschnitts lediglich an drei Kontaktstellen mit dem Bohrloch im direkten Kontakt steht. Im Bereich der weiter innen liegenden Abschnitte ist das Gewinde radial tiefer, was zu höheren Auszugswerten führt.

Gemäß einem weiteren Aspekt der Erfindung ist unmittelbar angrenzend am schraubenkopfseitigen Ende des Gewindes ein Fräsabschnitt am Schaft vorgesehen, der sich ausgehend vom Gewinde-Schaftabschnitt in Richtung des Schraubenkopfs erstreckt, wobei der Fräsabschnitt mehrere abstehende Schneidrippen mit einer höheren Gewindesteigung als die des Gewindes im Gewinde-Schaftbereich aufweist.

Der Fräsabschnitt sorgt ebenfalls für eine Reduzierung des Einschraubwiderstandes im gewindefreien Bereich zwischen Kopf und Fräsabschnitt. Insbesondere ermöglicht der Fräsabschnitt mit den Schneidrippen eine Reduzierung von Spannungsspitzen beim Eindrehen der Holzschraube und damit einen ruhigeren Lauf.

Ein weiterer Aspekt der Erfindung sieht vor, dass sich der Gewindekern im Fräsabschnitt in Richtung des Schraubenkopfs aufweitet, insbesondere kegelförmig, weiter insbesondere wobei der Gewindekern im gesamten Fräsabschnitt kegelförmig ausgeführt ist.

Der oben benannte Aspekt beruht auf der Überlegung, dass der schwächste Bereich einer Holzschraube üblicherweise der Übergang zwischen Schaft und Gewindebereich ist. Durch die Vergrößerung des Gewindekerns, beziehungsweise des Durchmessers des Gewindekerns, werden eine Verringerung von Spannungsspitzen während des Eindrehens und Reduzierung von Kerbwirkungen bei Lastaufnahme erreicht, wodurch der Übergang zwischen Schaft und Gewindebereich weniger anfällig für Beschädigungen ist.

Gemäß einem anderen Aspekt der Erfindung ist eine ungerade Anzahl an Schneidrippen im Fräsabschnitt vorgesehen, insbesondere wobei drei, fünf oder sieben Schneidrippen vorgesehen sind und/oder, dass die Schneidrippe mit der Rotationsmittelachse der Holzschraube einen Winkel β einschließt, der in einem Bereich von 40 bis 50° liegt.

Durch eine ungerade Anzahl an Schneidrippen wird ein verbessertes Eindrehverhalten der Holzschraube erreicht, da diese beim Eindrehen runder läuft.

Ein weiterer Aspekt der Erfindung sieht vor, dass der Gewindekern, von der Spitze aus betrachtet, im Fräsabschnitt über seine gesamte Länge in sämtlichen Radialabschnitten kontinuierlich von einem unrunden, bevorzugt einem trilobularen, Gewindekernquerschnitt in einen kreisringförmigen Gewindekernquerschnitt übergeht.

Auf diese Weise wird ein fließender Übergang zwischen dem Gewinde-Schaftabschnitt erreicht, der über seine gesamte Länge in sämtlichen Radialschnitten einen trilobularen Gewindekernquerschnitt aufweist, und dem gewindefreien Bereich zwischen Kopf und Fräsabschnitt, der über seine gesamte Länge bis zum Schraubenkopf in sämtlichen Radialschnitten kreisrund ist. Anders ausgedrückt stellt der Gewindekern des Fräsabschnitts eine Mischform zwischen einem unrunden, insbesondere einem trilobularen, Gewindekern und einem kreisrunden Gewindekernquerschnitt dar.

Mit dem Begriff "kontinuierlich" ist gemeint, dass der unrunde, insbesondere der trilobulare, Gewindekernquerschnitt des Gewinde-Schaftabschnitts ohne Unterbrechung und Stufen oder Hinterschnitte auf den kreisringförmigen Gewindekernquerschnitt des gewindefreien Abschnitts übergeht. Dadurch werden Kerben vermieden, die eine Verringerung des Querschnitts verursachen und damit die Formstabilität der Schraube herabsetzen würden.

Die Erfindung wird nachfolgend anhand von Ausführungsbeispielen mit Bezug auf die beigefügten Zeichnungen näher beschrieben. In den Zeichnungen zeigen
- Figur 1 in einer Seitenansicht eine erfindungsgemäße Holzschraube;
- Figur 2 in einer Seitenansicht einen konvex kegelförmigen Spitzenabschnitt der erfindungsgemäßen Holzschraube aus Figur 1;
- Figur 3 eine isometrische Darstellung des konvex kegelförmigen Spitzenabschnitts der erfindungsgemäßen Holzschraube aus Figur 1;
- Figur 4 eine weitere Seitenansicht des konvex kegelförmigen Spitzenabschnitts der erfindungsgemäßen Holzschraube aus Figur 1;
- Figur 5 in einer Schnittansicht entlang der Schnittlinie A-A in Figur 4 den konvex kegelförmigen Spitzenabschnitt der erfindungsgemäßen Holzschraube aus Figur 1;
- Figur 6 in einer Seitenansicht einen konvex kegelförmigen Spitzenabschnitt mit einem ringförmigen Spanbrecher;
- Figur 7 in einer Schnittansicht entlang einer Schnittlinie B-B einen trilobularen Querschnitt des Gewindekerns im Gewinde-Schaftabschnitt der erfindungsgemäßen Holzschraube aus Figur 1; und
- Figur 8 in einer vergrößerten Seitenansicht einen Fräsabschnitt der erfindungsgemäßen Holzschraube aus Figur 1.

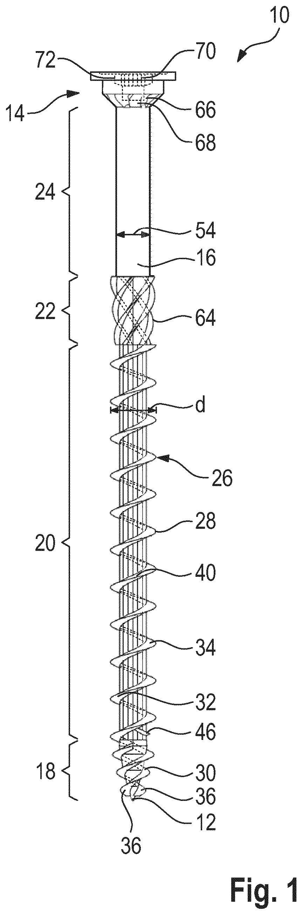

Figur 1 zeigt eine Schraube 10 in einer Seitenansicht. Bei der Schraube 10 handelt es sich um eine Holzschraube, genauer gesagt um eine selbst schneidende Holzschraube.

Die Schraube 10 weist verschiedene Abschnitte auf, und zwar eine Spitze 12, einen Schraubenkopf 14, einen Schaft 16 und einen konvex kegelförmigen Spitzenabschnitt 18, der den Übergang zwischen dem Schaft 16 und der Spitze 12 bildet.

Angrenzend an dem konvex kegelförmigen Spitzenabschnitt 18 ist ein zylindrischer Gewinde-Schaftabschnitt 20 mit einem zylindrischen Gewindekern vorgesehen, der sich ausgehend vom konvex kegelförmigen Spitzenabschnitt 18 in Richtung des Schraubenkopfs 14 erstreckt.

An das schraubenkopfseitige Ende des Gewinde-Schaftabschnitts 20 schließt sich ein Fräsabschnitt 22 an, der sich ebenfalls in Richtung Schraubenkopf 14 erstreckt.

Der Fräsabschnitt 22 wird schraubenkopfseitig von einem gewindefreien Abschnitt 24 begrenzt, der von dem Fräsabschnitt 22 ausgehend in den Schraubenkopf 14 mündet und bei diesem endet.

Nachfolgend werden die oben genannten Abschnitte näher erläutert.

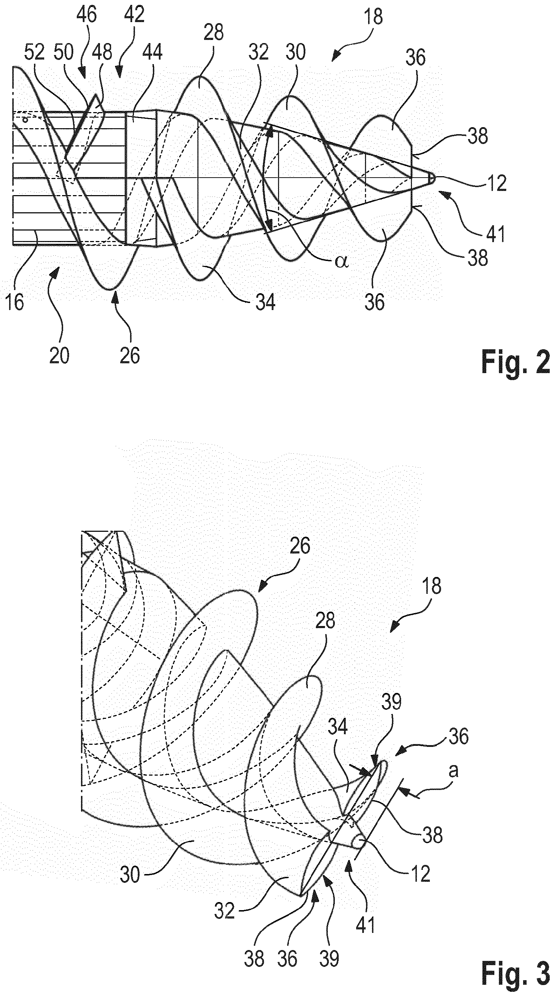

Zunächst werden der Gewinde-Schaftabschnitt 20 und der Spitzenabschnitt 18 anhand der Figuren 2 bis 5 näher betrachtet.

Wie in der Figur 2 gut zu erkennen ist, weist die Schraube 10 ferner ein Gewinde 26 auf, das sich über den am konvex kegelförmigen Spitzenabschnitt 18 angrenzenden zylindrischen Gewinde-Schaftabschnitts 20 in den Spitzenabschnitt 18 hineinerstreckt.

Im Bereich des Spitzenabschnitts 18 ist das Gewinde 26 zweigängig ausgebildet. Genauer betrachtet ist das Gewinde 26 ausschließlich im Bereich des Spitzenabschnitts 18 zweigängig und im Bereich des Gewinde-Schaftabschnitts 20 eingängig.

Insofern weist das Gewinde 26 im Bereich des konvex kegelförmigen Spitzenabschnitts 18 einen ersten Gewindegang 28 und einen zweiten Gewindegang 30 auf.

Beide Gewindegänge 28, 30 verlaufen um 180° zueinander versetzt und enden in Richtung zu der Spitze 12 in einem Abstand a. Insbesondere enden der erste Gewindegang 28 und der zweite Gewindegang 30 im gleichen Abstand a zu der Spitze 12.

Der erste Gewindegang 28 und der zweite Gewindegang 30 des Gewindes 26 weisen jeweils spitzenseitige Gewindeflanken 32 und schraubenkopfseitige Gewindeflanken 34 auf, die entgegengesetzt zueinander angeordnet sind. Dabei sind die spitzenseitigen Gewindeflanken 32 zu der Spitze 12 hin geneigt. Dies bedeutet, dass seitlich betrachtet die spitzenseitigen Gewindeflanken 32 und die Rotationsmittelachse Rₘ einen der Spitze zugewandten Winkel γ einschließen, der kleiner oder gleich 90° ist.

Wie in den Figuren 2 und 3 gut zu erkennen ist, enden der erste Gewindegang 28 und der zweite Gewindegang 30 des zweigängigen Gewindes 26 jeweils in einem spitzenseitigen Schneidflügel 36.

Wie in den Figuren 2 und 3 gezeigt, können die Schneidflügel 36 dieselbe radiale Höhe aufweisen wie das in den Schneidflügeln mündende Gewinde 26. Es ist aber auch denkbar, dass die Schneidflügel 36 eine geringere radiale Höhe aufweisen als das Gewinde 26, das in den Schneidflügeln 36 mündet (hier nicht gezeigt). Beispielsweise können die Schneidflügel 36 eine radiale Höhe von bis zu 1/8, 1/4, oder 1/2 der Höhe des Gewindes 26 aufweisen.

Jeder spitzenseitige Schneidflügel 36 weist eine Schneidkante 38 auf, die sich im Wesentlichen in einem senkrechten Winkel zu der Rotationsmittelachse Rₘ der Holzschraube 10 erstreckt. Die Schneidkante 38 wird am Zusammentreffen der kopfseitigen Gewindeflanke 34 eines Gewindegangs und einer Freifläche 39 gebildet. Die kopfseitige Gewindeflanke 34 bildet in diesem Fall die Spanfläche in Bezug zu der Schneidkante 38.

In der gezeigten Ausführungsform wird die Freifläche 39 von der Schneidkante 38 und der spitzenseitigen Gewindeflanke 32 begrenzt und entspricht im Wesentlichen dem Querschnitt eines Gewindegangs 28, 30. Insbesondere entspricht die Freifläche 39 einem schrägen Schnitt durch einen der Gewindegänge 28, 30.

Da die Gewindeflanken 32, 34 in der gezeigten Ausführungsform konvex sind, ergibt sich dementsprechend eine Freifläche 39 in Form einer Ellipse.

Wie in Figur 3 gut zu erkennen ist, geht die Schneidkante 38 des Schneidflügels 36 in eine senkrecht zu dieser stehende Schneidkante 40 über, die am Zusammentreffen von der spitzenseitigen Gewindeflanke 32 und der kopfseitigen Gewindeflanke 34 gebildet wird. Die Schneidkante 38 entspricht damit im Wesentlichen der oben genannten radialen Höhe der Schneidflügel 36.

Die Schneidkante 38 des Schneidflügels 36 ist eine andere Schneidkante als die Schneidkante 40, die das Rückgrat der Gewindeflanken 32, 34 bildet und ohnehin bei jeder bekannten Schraube mit einem Gewinde vorhanden ist. Insbesondere ist Schneidkante 38 eine separat von der Schneidkante 40 des Gewindes 26 ausgebildete Schneidkante.

Daraus folgt, dass sich die beschriebene Schneidkante 38 insbesondere nicht parallel zur Rotationsmittelachse Rₘ der Holzschraube erstreckt.

Darüber hinaus ist ein gewindefreier Bereich 41 zwischen der Spitze 12 und den beiden Schneidflügeln 36 gegeben, dessen Länge im Wesentlichen den eingangs definierten Abstand a entspricht. Der Abstand a ist in den Zeichnungen gezeigt als der Abstand zweier radialer, paralleler Linien, die radial zur Mittelachse verlaufen und einerseits durch die Spitze und andererseits durch die Enden der Gewindegänge 28, 30 verlaufen. Mit anderen Worten ist der Abstand a auch durch den Abstand zweier paralleler Ebenen definiert. Die erste Ebene verläuft radial zur Mittelachse und beinhaltet die Spitze und die zweite Ebene beinhaltet die Enden der Gewindegänge 28, 30.

Ausgehend von der punktförmigen Spitze 12 und dem daran anschließenden gewindefreien Bereich 41 beginnen die Schneidflügel 36, von denen aus sich jeweils der erste Gewindegang 28 und der zweite Gewindegang 30 erstrecken.

Dabei endet einer der beiden Gewindegänge 28, 30 vor dem Übergang zum Gewinde-Schaftabschnitt 20 am Spitzenabschnitt 18 und der andere Gewindegang 28, 30 erstreckt sich entlang des Gewinde-Schaftabschnitts 20 bis zu dem Fräsabschnitt 22.

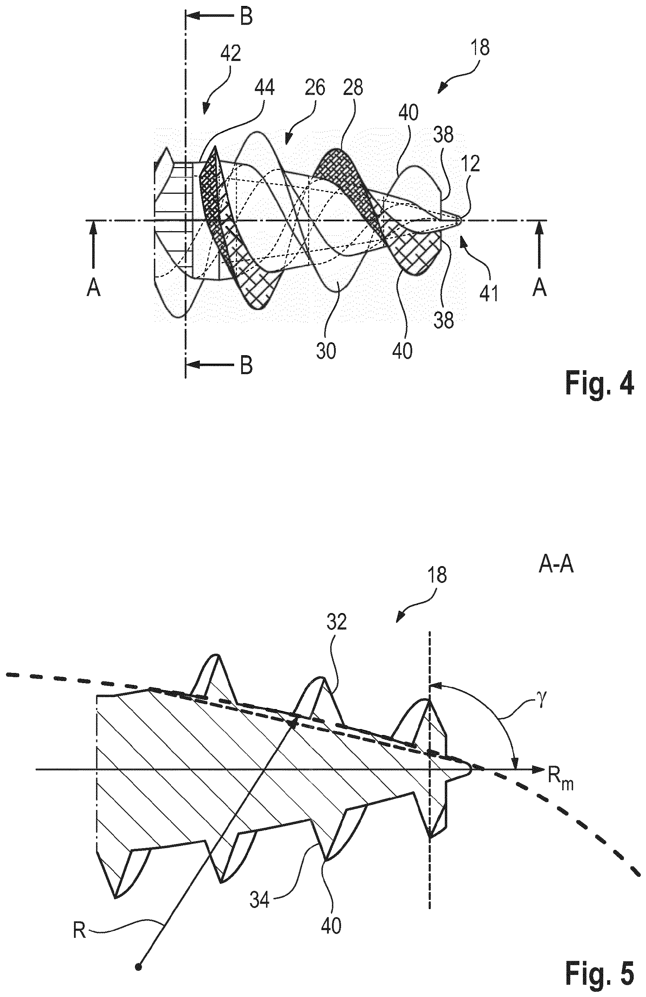

Neben dem doppelgängigen Gewinde 26 und den Schneidflügeln 36 zeichnet sich der konvex kegelförmige Spitzenabschnitt 18 durch die konvexe Geometrie seiner Außenkontur aus. Diese ist besonders gut in Figur 2 und 5 zu erkennen.

Insbesondere weist der konvex kegelförmige Spitzenabschnitt 18 einen spitzen Winkel α in einem Bereich von 15 bis 30° auf, bevorzugt von 25 bis 30°.

In einer Schnittebene betrachtet, in der die Rotationsmittelachse liegt, weist der Spitzenabschnitt 18 einen Radius R zur Bildung der Konvexität auf, für den der folgende Zusammenhang gilt, bezogen auf den Nenndurchmesser d des Gewindes der Holzschraube 10 im Gewinde-Schaftabschnitt 20: d/R = 0,13 - 0,18, bevorzugt von d/R = 0,145 - 0,175.

Zwischen dem Spitzenabschnitt 18 und dem Gewinde-Schaftabschnitt 20 ist ein Übergangsabschnitt 42 vorgesehen.

Genauer betrachtet geht der Spitzenabschnitt 18 in Richtung des Schraubenkopfs 14 im Bereich des Übergangsabschnitt 42 in einen kegligen Abschnitt 44 über, der sich ausgehend vom Spitzenabschnitt 18 in Richtung des Gewinde-Schaftabschnitts 20 erstreckt und beide Abschnitte 18, 20 miteinander verbindet. In Richtung des Gewinde-Schaftabschnitts 20 verjüngt sich der Durchmesser des kegligen Abschnitts 44 bis dieser den zylindrischen Kerndurchmesser des Schafts 16 im Bereich des Gewinde-Schaftabschnitts 20 entspricht.

Ausgehend vom kegeligen Abschnitt 44 erstreckt sich der Gewinde-Schaftabschnitt 20 bis zum Fräsabschnitt 22.

Am spitzenseitigen Ende des Gewinde-Schaftabschnitts 20, also im Übergangsbereich zwischen Spitzenabschnitt 18 und Gewinde-Schaftabschnitt 20, ist ein Spanbrecher 46 in Form einer Rippe vorgesehen. Der Spanbrecher 46 ist in einem Abstand zum kegligen Abschnitt 44 und damit in einem Abstand zum zweigängigen Gewinde 26 angeordnet.

Der Spanbrecher 46 kann beispielsweise die Form einer Rippe aufweisen, die, wie in den Figuren 1 und 2 gezeigt, ausgehend von dem Gewinde 26 über die Außenkontur des Schafts 16 verläuft.

Ebenso ist es denkbar, dass der Spanbrecher 46 sich wenigstens abschnittsweise um den Gewinde-Schaftabschnitt 20 ringförmig herum erstreckt, wobei der Spanbrecher 46 bevorzugt umfangsmäßig durchgängig ausgeführt ist.

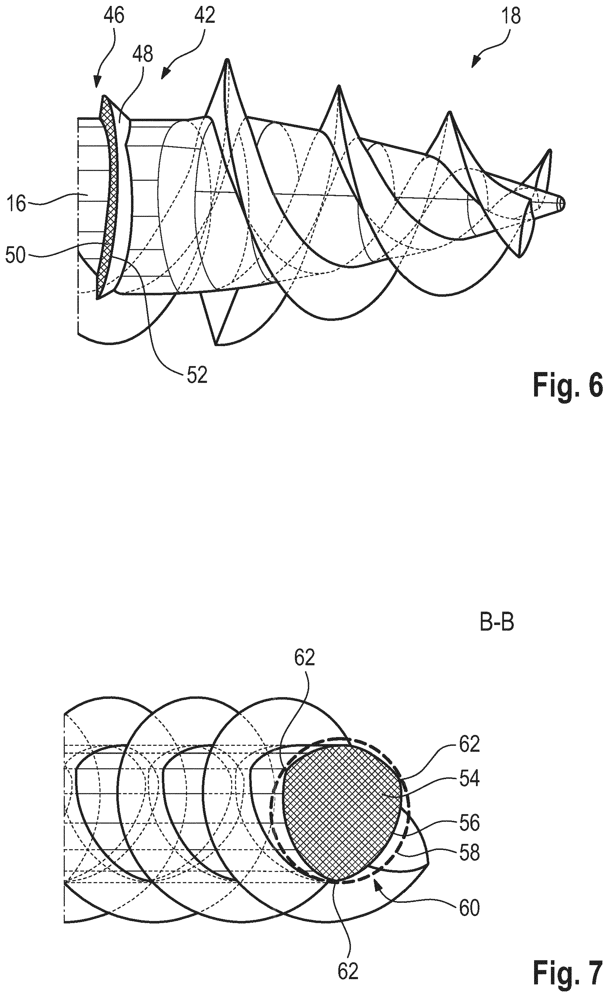

Diese Ausführungsform ist in Figur 6 gezeigt. Der Spanbrecher 46 umfasst in diesem Beispiel eine der Spitze 12 zugewandte Gewindeflanke 48 sowie eine dem Schraubenkopf 14 zugewandte Gewindeflanke 50, die am Zusammentreffen eine Schneidkante 52 bilden. Insbesondere erstreckt sich die dem Schraubenkopf 14 zugewandte Gewindeflanke 48 im Wesentlichen senkrecht zu der Rotationsmittelachse Rₘ der Holzschraube 10.

Zudem ist es auch möglich, eine Rippe im Bereich des konvex kegelförmigen Spitzenabschnitts 18 anzuordnen, die sich abschnittsweise von einem Gewindegang 28, 30 zum nächsten Gewindegang 28, 30 in Längsrichtung der Schraube 10 erstreckt und an den entgegengesetzten Enden in das Gewinde 26 übergeht, ohne sich mit einem Gewindegang 28, 30 zu überkreuzen, wobei sich die Rippe bevorzugt über maximal 1/3 der Länge des konvex kegelförmigen Spitzenabschnitts 18, insbesondere über weniger als 1/3 der Länge des konvex kegelförmigen Spitzenabschnitts 18, erstreckt (hier nicht gezeigt).

Wie in Figur 7 zu erkennen ist, ist der Gewindekern 54 des Schafts 16 im Gewinde-Schaftabschnitt 20 zylindrisch ausgeführt. Insbesondere ist der Gewinde-Schaftabschnitt 20, also der Gewindekern 54 mit dem Gewinde 26, unrund ausgeführt beziehungsweise weist einen unrunden Querschnitt auf.

Bevorzugt weist der Querschnitt eine trilobulare Form auf, wie in Figur 7 zu erkennen.

Aufgrund der trilobularen Form berührt der Querschnitt 56 des Schafts 16 die Umfangswand 58 eines Bohrlochs 60 lediglich mit drei Kontaktstellen 62.

Nachfolgend wird der Fräsabschnitt 22 genauer erläutert.

Unmittelbar angrenzend am schraubenkopfseitigen Ende des Gewindes 26 ist der Fräsabschnitt 22 am Schaft 16 vorgesehen, der sich ausgehend vom Gewinde-Schaftabschnitt 20 in Richtung des Schraubenkopfs 14 erstreckt, wobei der Fräsabschnitt 22 mehrere abstehende Schneidrippen 64 aufweist. Die Schneidrippen 64 weisen eine höhere Gewindesteigung auf als die Gewindegänge 28, 30 des Gewindes 26 im Gewinde-Schaftabschnitt 20.

Insbesondere ist eine ungerade Anzahl an Schneidrippen 64 im Fräsabschnitt 22 vorgesehen. Bevorzugt sind drei, fünf oder sieben Schneidrippen 64 vorgesehen.

Besonders bevorzugt schließt eine Schneidrippe 64 mit der Rotationsmittelachse der Holzschraube 10 einen Winkel β ein, der in einem Bereich von 40 bis 50° liegt.

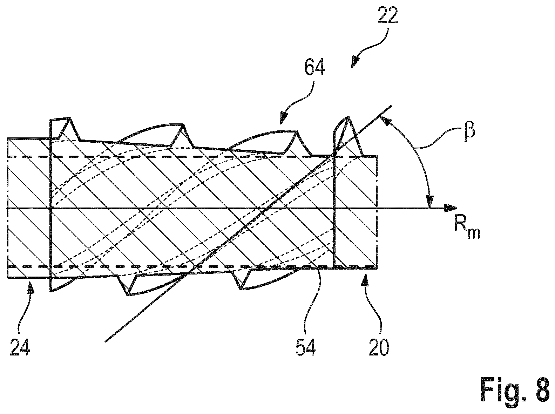

Wie in Figur 8 gut zu erkennen ist, weitet sich der Gewindekern 54 im Fräsabschnitt 22 in Richtung des Schraubenkopfs 14 auf. Insbesondere weitet sich der Gewindekern 54 kegelförmig auf.

Besonders bevorzugt ist der Gewindekern 54 im gesamten Fräsabschnitt 22 keglig ausgeführt.

Ferner geht der Gewindekern 54, von der Spitze aus betrachtet, im Fräsabschnitt 22 über seine gesamte Länge in sämtlichen Radialabschnitten kontinuierlich von einem unrunden, bevorzugt einem trilobularen, Gewindekernquerschnitt in einen kreisrunden Gewindekernquerschnitt über. Damit stellt der Fräsabschnitt 22 einen Übergangsbereich zwischen dem unrunden bzw. trilobular geformten Gewindekern 54 des Gewinde-Schaftabschnitts 20 und dem kreisringförmigen Gewindekern 54 des gewindefreien Abschnitts 24 dar. Der Übergang von einem Querschnitt zum anderen Querschnitt vollzieht sich dabei kontinuierlich über die gesamte Länge des Fräsabschnitts 22 hinweg, also stufenlos, sodass keine Hinterschneidungen oder Einkerbungen an den Schnittstellen zwischen dem Gewinde-Schaftabschnitt 20 und dem Fräsabschnitt 22 sowie zwischen dem gewindefreien Abschnitt 24 und dem Fräsabschnitt 22 vorhanden sind.

Nachfolgend wird der gewindefreie Abschnitt 24 und der Schraubenkopf 14 näher beschrieben.

Angrenzend an dem Fräsabschnitt 22 ist der gewindefreie Abschnitt 24 vorgesehen, der sich ausgehend vom Fräsabschnitt 22 bis zum Schraubenkopf 14 erstreckt und in diesem endet. Wie oben bereits beschrieben, ist der Gewindekern 54 im gewindefreien Abschnitt 24 über seine gesamte Länge in sämtlichen Radialschnitten kreisrund ausgeführt.

Der Schraubenkopf 14 ist auf seiner der Spitze 12 zugewandten Unterseite konisch und hat in diesem Bereich Nuten 66 mit angrenzenden Schneidkanten 68.

Ferner weist der Schraubenkopf 14 eine Ausnehmung 70 auf, die eine Antriebsgeometrie 72 hat, die in einem Kontaktbereich mit einer eingesteckten Schraubendreher-Antriebsgeometrie (hier nicht gezeigt) als Negativ der Schraubendreher-Antriebsgeometrie (hier nicht gezeigt) ausgebildet ist.

## Patentansprüche

1. Holzschraube (10), mit einer Spitze (12), einem Schraubenkopf (14), einem Schaft (16), der sich vom Schraubenkopf (14) ausgehend erstreckt und in einen konvex kegelförmigen Spitzenabschnitt (18) übergeht, wobei der Spitzenabschnitt (18) den Übergang vom Schaft (16) zu der Spitze (12) bildet,
sowie einem Gewinde (26), das sich über einen am Spitzenabschnitt (18) angrenzenden zylindrischen Gewinde-Schaftabschnitt (20) in den Spitzenabschnitt (18) hineinerstreckt,
wobei das Gewinde (26) im Bereich des Spitzenabschnitts (18) zweigängig ausgebildet ist,
wobei ein Gewindegang (28, 30) vor dem Übergang zum Gewinde-Schaftabschnitt (20) am Spitzenabschnitt (18) endet und der andere Gewindegang (28, 30) bis zu einem Fräsabschnitt (22) des Schafts (16) verläuft, und
wobei in einem Übergangsbereich zwischen Spitzenabschnitt (18) und Gewinde-Schaftabschnitt (20) ein Spanbrecher in Form einer Rippe vorgesehen ist.

2. Holzschraube (10) nach Anspruch 1, **dadurch gekennzeichnet, dass** jeweils ein erster Gewindegang (28) des zweigängigen Gewindes (26) und ein zweiter Gewindegang (30) des zweigängigen Gewindes (26) in Richtung zu der Spitze (12) in einem Abstand (a) zu der Spitze (12) enden, insbesondere wobei der erste Gewindegang (28) und der zweite Gewindegang (30) im gleichen Abstand (a) zu der Spitze (12) enden.

3. Holzschraube (10) nach Anspruch 2, **dadurch gekennzeichnet, dass** der erste Gewindegang (28) und der zweite Gewindegang (30) des zweigängigen Gewindes (26) um 180° zueinander versetzt verlaufen.

4. Holzschraube (10) nach Anspruch 2 oder 3, **dadurch gekennzeichnet, dass** der erste Gewindegang (28) und der zweite Gewindegang (30) des zweigängigen Gewindes (26) jeweils schraubenkopfseitige Gewindeflanken (34) und davon entgegengesetzt angeordnete spitzenseitige Gewindeflanken (32) aufweisen, wobei die spitzenseitigen Gewindeflanken (32) zu der Spitze (12) hin geneigt sind.

5. Holzschraube (10) nach einem der Ansprüche 2 bis 4, **dadurch gekennzeichnet, dass** der erste Gewindegang (28) und der zweite Gewindegang (30) des zweigängigen Gewindes (26) jeweils in einem spitzenseitigen Schneidflügel (36) enden.

6. Holzschraube (10) nach Anspruch 5, **dadurch gekennzeichnet, dass** jeder Schneidflügel (36) eine Schneidkante (38) aufweist, die sich im Wesentlichen in einem senkrechten Winkel zu der Rotationsmittelachse (Rₘ) der Holzschraube (10) erstreckt.

7. Holzschraube (10) nach Anspruch 5 oder 6, **dadurch gekennzeichnet, dass** die Schneidflügel (36) jeweils dieselbe oder eine geringere radiale Höhe aufweisen wie bzw. als das in den Schneidflügeln mündende Gewinde (26).

8. Holzschraube (10) nach einem der vorhergehenden Ansprüche, **dadurch gekennzeichnet, dass** der konvex kegelförmige Spitzenabschnitt (18) mindestens eines der folgenden Merkmale aufweist:
- einen Spitzenwinkel α in einem Bereich von 15 - 30°, bevorzugt von 25 - 30°;
- in einer Schnittebene betrachtet, in der die Rotationsmittelachse (Rₘ) liegt, der Spitzenabschnitt (18) einen Radius (R) aufweist, für den der folgende Zusammenhang gilt, bezogen auf den Nenndurchmesser (d) des Gewindes (26) der Holzschraube (10) im Gewinde-Schaftabschnitt (20): d/R = 0,13 - 0,18, bevorzugt von d/R = 0,145 - 0,175.

9. Holzschraube (10) nach einem der vorhergehenden Ansprüche, **dadurch gekennzeichnet, dass** sich die Rippe wenigstens abschnittsweise um den Spitzenabschnitt (18) oder Gewinde-Schaftabschnitt (20) ringförmig herum erstreckt, wobei die Rippe bevorzugt umfangsmäßig durchgängig ausgeführt ist, oder, dass eine Rippe im Bereich des konvex kegelförmigen Spitzenabschnitts (18) vorgesehen ist, die sich abschnittsweise von einem Gewindegang (28, 30) zum nächsten Gewindegang (28, 30) in Längsrichtung der Schraube (10) erstreckt und an den entgegengesetzten Enden in das Gewinde (26) übergeht, ohne sich mit einem Gewindegang (28, 30) zu überkreuzen, wobei sich die Rippe bevorzugt über maximal 1/3 der Länge des konvex kegelförmigen Spitzenabschnitts (18), insbesondere über weniger als 1/3 der Länge des konvex kegelförmigen Spitzenabschnitts (18), erstreckt.

10. Holzschraube (10) nach einem der vorhergehenden Ansprüche, **dadurch gekennzeichnet, dass** der Gewinde-Schaftabschnitt (20) und/oder der Spitzenabschnitt (18) einen unrunden Querschnitt aufweisen, insbesondere wobei der Querschnitt eine trilobulare Form aufweist.

11. Holzschraube (10) nach einem der vorhergehenden Ansprüche, **dadurch gekennzeichnet, dass** unmittelbar angrenzend am schraubenkopfseitigen Ende des Gewindes (26) ein Fräsabschnitt (22) am Schaft (16) vorgesehen ist, der sich ausgehend vom Gewinde-Schaftabschnitt (20) in Richtung des Schraubenkopfs (14) erstreckt, wobei der Fräsabschnitt (22) mehrere abstehende Schneidrippen (64) mit einer höheren Gewindesteigung als die des Gewindes (26) im Gewinde-Schaftabschnitt (20) aufweist.

12. Holzschraube (10) nach Anspruch 11, **dadurch gekennzeichnet, dass** sich der Gewindekern (54) im Fräsabschnitt (22) in Richtung des Schraubenkopfs (14) aufweitet, insbesondere kegelförmig, weiter insbesondere wobei der Gewindekern (54) im gesamten Fräsabschnitt (22) kegelig ausgeführt ist.

13. Holzschraube (10) nach Anspruch 11 oder 12, **dadurch gekennzeichnet, dass** eine ungerade Anzahl an Schneidrippen (64) im Fräsabschnitt (22) vorgesehen ist, insbesondere wobei drei, fünf oder sieben Schneidrippen (64) vorgesehen sind und/oder, dass jede Schneidrippe (64) mit der Rotationsmittelachse (Rₘ) der Holzschraube (10) einen Winkel β einschließt, der in einem Bereich von 40 - 50° liegt.

14. Holzschraube (10) nach einem der Ansprüche 11 bis 13, **dadurch gekennzeichnet, dass** der Gewindekern (54), von der Spitze aus betrachtet, im Fräsabschnitt (22) über seine gesamte Länge in sämtlichen Radialabschnitten kontinuierlich von einem unrunden, bevorzugt einem trilobularen, Gewindekernquerschnitt in einen kreisrunden Gewindekernquerschnitt übergeht.

## Claims

1. Wood screw (10), having a tip (12), a screw head (14), a shank (16) which extends from the screw head (14) and transitions into a convex conical tip portion (18),
wherein the tip portion (18) forms the transition from the shank (16) to the tip (12),
and a thread (26) which extends into the tip portion (18) via a cylindrical thread-shank portion (20) adjacent to the tip portion (18),
wherein the thread (26) is configured to be a double-start thread in the region of the tip portion (18),
wherein one thread turn (28, 30) terminates before the transition to the thread-shank portion (20) at the tip portion (18) and the other thread turn (28, 30) runs as far as a milled portion (22) of the shank (16), and
wherein a chip breaker in the form of a rib is provided in a transition region between the tip portion (18) and thread-shank portion (20).

2. Wood screw (10) according to Claim 1, **characterized in that** in each case a first thread turn (28) of the double-start thread (26) and a second thread turn (30) of the double-start thread (26) terminate at a distance (a) from the tip (12) in the direction of the tip (12), in particular wherein the first thread turn (28) and the second thread turn (30) terminate at the same distance (a) from the tip (12).

3. Wood screw (10) according to Claim 2, **characterized in that** the first thread turn (28) and the second thread turn (30) of the double-start thread (26) run offset by 180° to one another.

4. Wood screw (10) according to Claim 2 or 3, **characterized in that** the first thread turn (28) and the second thread turn (30) of the double-start thread (26) in each case have thread flanks (34) on the screw head side and thread flanks (32) on the tip side arranged opposite thereto, wherein the thread flanks (32) on the tip side are inclined toward the tip (12).

5. Wood screw (10) according to one of Claims 2 to 4, **characterized in that** the first thread turn (28) and the second thread turn (30) of the double-start thread (26) in each case terminate in a cutting blade (36) on the tip side.

6. Wood screw (10) according to Claim 5, **characterized in that** each cutting blade (36) has a cutting edge (38) which extends substantially at a perpendicular angle to the central axis of rotation (Rₘ) of the wood screw (10).

7. Wood screw (10) according to Claim 5 or 6, **characterized in that** the cutting blades (36) in each case have a radial height which is the same as or lower than the thread (26) leading into the cutting blades.

8. Wood screw (10) according to one of the preceding claims, **characterized in that** the convex conical tip portion (18) has at least one of the following features:
- an acute angle α ranging from 15 - 30°, preferably from 25 - 30°;
- when viewed in a cutting plane, in which the central axis of rotation (Rₘ) is located, the tip portion (18) has a radius (R) to which the following relationship applies, relative to the nominal diameter (d) of the thread (26) of the wood screw (10) in the thread-shank portion (20): d/R = 0.13 - 0.18, preferably d/R = 0.145 - 0.175.

9. Wood screw (10) according to one of the preceding claims, **characterized in that** the rib extends at least in some portions around the tip portion (18) or thread-shank portion (20) in an annular manner, wherein the rib is preferably designed continuously around the circumference, or that a rib is provided in the region of the convex conical tip portion (18), which rib extends in some portions from one thread turn (28, 30) to the next thread turn (28, 30) in the longitudinal direction of the screw (10) and transitions into the thread (26) at the opposing ends without intersecting the thread turn (28, 30), wherein the rib preferably extends over a maximum of 1/3 of the length of the convex conical tip portion (18), in particular over less than 1/3 of the length of the convex conical tip portion (18).

10. Wood screw (10) according to one of the preceding claims, **characterized in that** the thread-shank portion (20) and/or the tip portion (18) has a non-circular cross section, in particular wherein the cross section has a trilobular shape.

11. Wood screw (10) according to one of the preceding claims, **characterized in that** a milled portion (22) which extends from the thread-shank portion (20) in the direction of the screw head (14) is provided on the shank (16) immediately adjacent to the end of the thread (26) on the screw head side, wherein the milled portion (22) has a plurality of protruding cutting ribs (64) with a greater thread pitch than that of the thread (26) in the thread-shank portion (20).

12. Wood screw (10) according to Claim 11, **characterized in that** the thread core (54) in the milled portion (22) widens in the direction of the screw head (14), in particular conically, further in particular wherein the thread core (54) is designed to be conical in the entire milled portion (22).

13. Wood screw (10) according to Claim 11 or 12, **characterized in that** an uneven number of cutting ribs (64) is provided in the milled portion (22), in particular wherein three, five or seven cutting ribs (64) are provided and/or each cutting rib (64) encloses with the central axis of rotation (Rₘ) of the wood screw (10) an angle β which ranges from 40 - 50°.

14. Wood screw (10) according to one of Claims 11 to 13, **characterized in that**, when viewed from the tip, the thread core (54) in the milled portion (22) transitions continuously over its entire length in all radial portions from a non-circular, preferably a trilobular, thread core cross section, into a circular thread core cross section.

## Revendications

1. Vis à bois (10), comprenant une pointe (12), une tête de vis (14), une tige (16) qui s'étend à partir de la tête de vis (14) et se transforme en une portion de pointe (18) de forme conique convexe, la portion de pointe (18) formant la transition de la tige (16) à la pointe (12),
ainsi qu'un filetage (26), qui s'étend dans la portion de pointe (18) par l'intermédiaire d'une portion de tige filetée cylindrique (20) adjacente à la portion de pointe (18),
le filetage (26) étant réalisé à double filet dans la zone de la portion de pointe (18),
un filet (28, 30) se terminant au niveau de la portion de pointe (18) avant la transition vers la portion de tige filetée (20) et l'autre filet (28, 30) suivant un tracé jusqu'à une portion fraisée (22) de la tige (16), et
un brise-copeaux en forme de nervure étant prévu dans une zone de transition entre la portion de pointe (18) et la portion de tige filetée (20).

2. Vis à bois (10) selon la revendication 1, **caractérisée en ce qu'**un premier filet (28) du filetage à double filet (26) et un deuxième filet (30) du filetage à double filet (26) se terminent respectivement, en direction de la pointe (12), à une distance (a) de la pointe (12), le premier filet (28) et le deuxième filet (30) se terminant notamment à la même distance (a) de la pointe (12).

3. Vis à bois (10) selon la revendication 2, **caractérisée en ce que** le premier filet (28) et le deuxième filet (30) du filetage à double filet (26) suivent un tracé en étant décalés de 180° l'un par rapport à l'autre.

4. Vis à bois (10) selon la revendication 2 ou 3, **caractérisée en ce que** le premier filet (28) et le deuxième filet (30) du filetage à double filet (26) présentent respectivement des flancs de filet côté tête de vis (34) et des flancs de filet côté pointe (32) disposés en vis-à-vis, les flancs de filet côté pointe (32) étant inclinés vers la pointe (12).

5. Vis à bois (10) selon l'une des revendications 2 à 4, **caractérisée en ce que** le premier filet (28) et le deuxième filet (30) du filetage à double filet (26) se terminent respectivement en une ailette de coupe (36) côté pointe.

6. Vis à bois (10) selon la revendication 5, **caractérisée en ce que** chaque ailette de coupe (36) présente une arête de coupe (38) qui s'étend sensiblement selon un angle perpendiculaire à l'axe central de rotation (Rₘ) de la vis à bois (10).

7. Vis à bois (10) selon la revendication 5 ou 6, **caractérisée en ce que** les ailettes de coupe (36) présentent respectivement une hauteur radiale identique ou inférieure à celle du filetage (26) qui débouche dans les ailettes de coupe.

8. Vis à bois (10) selon l'une des revendications précédentes, **caractérisée en ce que** la portion de pointe (18) de forme conique convexe présente au moins l'une des caractéristiques suivantes :
- un angle de pointe α compris dans une plage de 15 à 30°, de préférence de 25 à 30° ;
- vue dans un plan de coupe dans lequel se trouve l'axe central de rotation (Rₘ), la portion de pointe (18) présente un rayon (R) pour lequel s'applique la relation suivante, en référence au diamètre nominal (d) du filetage (26) de la vis à bois (10) dans la portion de tige filetée (20) : d/R = 0,13 - 0,18, de préférence d/R = 0,145 - 0,175.

9. Vis à bois (10) selon l'une des revendications précédentes, **caractérisée en ce que** la nervure s'étend au moins par portions autour de la portion de pointe (18) ou de la portion de tige filetée (20) de manière annulaire, la nervure étant de préférence réalisée de manière continue sur la circonférence, ou **en ce qu'**une nervure est prévue dans la zone de la portion de pointe (18) de conique convexe, qui s'étend par portions d'un filet (28, 30) au filet suivant (28, 30) dans le sens longitudinal de la vis (10) et se transforme en le filetage (26) aux extrémités opposées sans croiser un filet (28, 30), la nervure s'étendant de préférence au maximum sur 1/3 de la longueur de la portion de pointe (18) de forme conique convexe, notamment sur moins de 1/3 de la longueur de la portion de pointe (18) de forme conique convexe.

10. Vis à bois (10) selon l'une des revendications précédentes, **caractérisée en ce que** la portion de tige filetée (20) et/ou la portion de pointe (18) présentent une section transversale non circulaire, en particulier une section transversale trilobulaire.

11. Vis à bois (10) selon l'une des revendications précédentes, **caractérisée en ce qu'**une portion fraisée (22) est prévue sur la tige (16) directement adjacente à l'extrémité du filetage (26) côté tête de vis, laquelle s'étend depuis la portion de tige filetée (20) en direction de la tête de vis (14), la portion fraisée (22) présentant une pluralité de nervures de coupe saillantes (64) avec un pas de filetage supérieur à celui du filetage (26) dans la portion de tige filetée (20).

12. Vis à bois (10) selon la revendication 11, **caractérisée en ce que** le noyau fileté (54) dans la portion fraisée (22) s'élargit en direction de la tête de vis (14), en particulier de manière conique, le noyau fileté (54) étant en plus notamment réalisé de manière conique dans toute la portion fraisée (22).

13. Vis à bois (10) selon la revendication 11 ou 12, **caractérisée en ce qu'**un nombre impair de nervures de coupe (64) est prévu dans la portion fraisée (22), trois, cinq ou sept nervures de coupe (64) étant notamment prévues, et/ou **en ce que** chaque nervure de coupe (64) forme avec l'axe central de rotation (Rₘ) de la vis à bois (10) un angle β qui est compris dans la plage de 40 à 50°.

14. Vis à bois (10) selon l'une des revendications 11 à 13, **caractérisée en ce que** le noyau fileté (54), vu depuis la pointe, se transforme en continu, dans la portion fraisée (22) sur toute sa longueur dans toutes les portions radiales, d'une section transversale de noyau fileté non circulaire, de préférence trilobulaire, en une section transversale de noyau fileté circulaire.
